# EUROPEAN PATENT SPECIFICATION

(11) **EP 0 961 650 B1**
(45) Date of publication and mention of the grant of the patent: **13.06.2001**
(21) Application number: 98903168.7
(22) Date of filing: 09.02.1998
(51) Int. Cl.: B01D 46/02

(54) **FILTRATION APPARATUS**
FILTRATIONSGERÄT
APPAREIL FILTRANT

(30) Priority: 20.02.1997 GB 9703502
(43) Date of publication of application: 08.12.1999
(73) Proprietor: Madison Filter 981 Limited, Blackburn, Lancashire BB2 6AY (GB)
(72) Inventor: HAES, Robert, Lawrence, D-38259 Salzgitter (DE); BRINKMANN, Heiko, D-38259 Salzgitter (DE)
(74) Representative: Phillips, Patricia Marie
(86) International application number: GB9800399
(87) International publication number: WO9836819

(56) References cited:
- WO-A-95/25580
- US-A- 2 308 310
- US-A- 3 937 621
- US-A- 4 292 057
- US-A- 5 536 290

## Description

The present invention relates to a filtration apparatus and particularly, but not exclusively, to a filtration apparatus for use in separating contaminants from air and other fluids.

It is known to provide a filtration apparatus for removing dust from air comprising a plurality of filter cartridges arranged in rows, the filter cartridges being provided in register with holes through a metal sheet plate, such that the major portion of the filter cartridges lies beneath the plate and the air is drawn up or pressed through the filter cartridges, leaving dust on the filter surface. The dust is removed either by shaking the elements side by side and/or reversing the flow of air through the filter by an air pulse jet cleaner.

The filters of the type hereinbefore described are rigid bodies comprising pleated filter material sealed at one end into a rigid moulded polyurethane "foot" and at the other end into a rigid or semi-rigid moulded polyurethane "head". The latter is held in the metal sheet plate aperture.

Numerous problems are associated with known filter cartridges. Firstly it is difficult to get a good seal between the metal sheet plate and the moulded polyurethane filter head owing to the fact that both consist of rigid materials. Furthermore known filter cartridges have to be made according to the specific dimensions of the metal sheet apertures, which requires the filter manufacturer to store a large number of moulds for the filter heads and feet with a wide range of dimensions. Such moulds are complicated, time-consuming and expensive to make. Finally filter cartridges are very difficult and cumbersome to fit and frequently the metal sheet plates are damaged due to the strong clamping needed between the filter and plate to give a good seal.

Alternative filters comprise a filter sleeve, bag or envelope. These comprise a sleeve, bag or envelope of flexible filter material that is closed at one end. These filters are not self-supporting, but instead are located over a wire or plastics mesh tube. The open end of the filters is secured into an aperture in a metal sheet plate. In WO-A-95/00626 the fixing arrangement for securing the filter to the metal plate comprises an endless resilient band which is sewn into the open end of the filter sleeve, bag or envelope.

An alternative filter sleeve, bag or envelope that has been made available comprises a standard filter sleeve, bag or envelope with an integrally moulded soft polyurethane head that is compressed to allow it to be pushed into an aperture in the metal plate. A groove is provided around the polyurethane head for receiving the plate edge that defines the aperture. An example of filter media of this type is shown in US-A-5632791. This product still suffers from the drawback of requiring many types of moulds of different dimensions for the moulded head. Furthermore the moulding operation is quite complicated and time consuming requiring quite a large amount of polymer to be moulded onto the outside of the filter.

Filter sleeves, bags or envelopes are generally less complicated to fit than filter cartridges, but as their filtration surface is not pleated their total filtration area is considerably less than that for filter cartridges of equivalent height and diameter. Hence more filter sleeves, bags or envelopes with greater dimensions are needed per unit area which is often impractical or too expensive for the filter customer.

The present invention therefore aims to overcome the problems associated with known filter cartridges and filter sleeves, bags and envelopes by providing a quick, simple and cost effective manner of fitting filters having a high filtration surface area.

According to a first aspect of the present invention there is provided a method of making a filtration apparatus comprising the steps of forming a cuff from a length of fabric and locating a band of resilient material within the cuff, moulding a body of polymer material to one end of the cuff and moulding the said body to one end of a tube or sleeve of self-supporting pleated filter material.

According to a second aspect of the present invention there is provided a filtration apparatus comprising a band of resilient material located within a cuff of fabric, the cuff being integrally moulded to a body of polymeric material, a tube or sleeve of self-supporting pleated filter material also being secured to the said polymer body.

The body of polymer material is ideally moulded to one end of the cuff in such a manner that the resilient band is proud of the polymer body; i.e. the resilient band and polymer body are not in register

The filtration apparatus of the invention is intended to allow a filter customer to increase their filtration capacity by replacing their filter sleeves with products of the invention, without having to invest in new filter plates. The nature of the spring band holding the cuff in place against the filter plate means that one particular diameter of band will be suitable for a very wide range of filter plate hole diameters.

The invention thus provides a filtration apparatus with a high filtration area which is simple and cheap to manufacture and is easy to fit in position. Fitting the filtration apparatus into the aperture of a metal plate simply requires the cuff and band to be compressed. When correctly positioned the resilient band will then spring back into place to lock the filtration apparatus in the plate aperture.

The cuff ideally comprises felt, such as a needlefelt, woven fabric or nonwoven fabric. The resilient band is preferably profiled so as to comprise a groove therein. The profiled band ideally has a one piece construction. This eliminates the effort and skill involved in making such profiled bands from a number of separate parts. Accordingly the bands are less expensive to manufacture.

The resilience may be provided by using a resilient material such as spring stainless steel or hard rubber. However, it is desirable that the bands are easily compressible by hand while being sufficiently resilient to retain their original shape when the compressive force has been removed. This is achieved by providing apertures such as holes, slots or the like in the band, particularly in the areas forming the profiled regions of the band. In some embodiments of the invention it is desirable to provide open ended apertures such as holes, slots or the like at one or both edges of the band.

The band is preferably captured in place by way of adhesive or stitching.

The polymer material is preferably soft and flexible, typically a polyurethane with a Shore D hardness of 20 - 50. It is noted that standard filter cartridges use rigid polyurethane with Shore D hardness of 70 - 80. For longer cuffs a more rigid polymer may be required, for example a hot-melt or a two-part epoxy resin. Injection moulding may be used to make this moulded part. Normally shorter cuffs are preferred since this results in less of the filter material being covered by the cuff. The preferred cuff length is in the range from 40 to 100 mm.

The construction of the filtration apparatus would take place in a mould. The cuff is integrally moulded to the polymer and the pleated filter material is inserted, by simply dipping its top (head) into the liquid polymer prior to curing the polymer so as to seal the end of the pleated filter material in the polymer. This method may also be used to seal the base (foot) of the filter material. The filtration apparatus of the invention may be made using a single mould design and a variable size cuff to reduce production costs.

The filters are preferably circular or even elliptical to allow for use of a circular resilient band, although any shape such as square, rectangular or hexagon may be used.

In a preferred embodiment of the invention a venturi nozzle is incorporated into the ring of polymer and the base of the cuff. The venturi nozzle directs a reverse pulse or jet of cleaning air into the centre of the filter in order to maximise cleaning efficiency.

In order that the present invention may be more readily understood specific embodiments thereof will now be described by way of example only with reference to the accompanying drawings in which:-
Fig. 1 is a perspective view of one filtration apparatus in accordance with the invention;
Fig.2 is a section through the vertical plane passing through the filtration apparatus;
Fig.3 is a perspective view of the resilient band of the apparatus of figs. 1 and 2; and
Fig.4 is a perspective view of a second filtration apparatus in accordance with the invention.

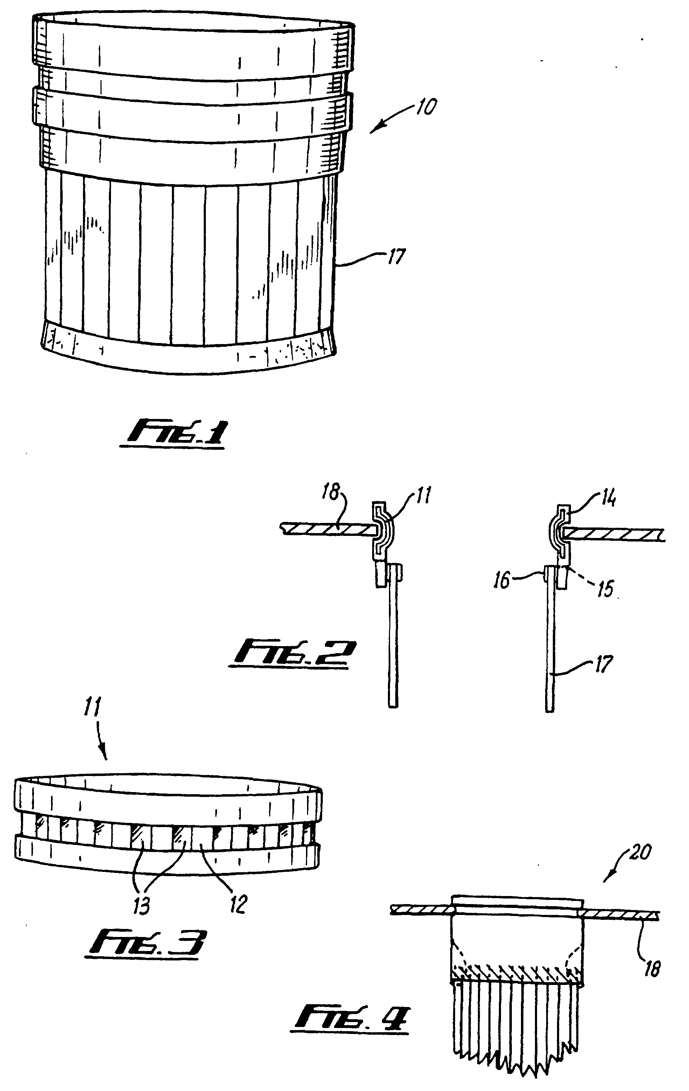

Referring to figs. 1 to 3 a filtration apparatus 10 comprises a continuous resilient stainless steel band 11 which is best illustrated in fig.3. The band is profiled so as to comprise an annular groove 12 therein. Apertures 13 are provided around the groove 12 so as to improve the resilience of the band 11. The band 11 is located near the folded region of an endless cuff of needlefelt fabric 14. A row of stitching 15 is provided around the cuff so as to capture the band 11 in the cuff 14. The end of the cuff 14 that extends below the stitching 15 is integrally moulded with a ring 16 of soft polyurethane material. An end of an endless ring of pleated filter material 17 is also located in the polyurethane ring 16. The other end of the pleated filter material 17 is closed by way of a cast or moulded polyurethane "foot".

In use the filtration apparatus is secured to an aperture in a metal plate 18. The resilient band is compressed by hand and then inserted in the plate aperture. The resilience of the band causes the band to spring out such that the metal plate is captured in the groove 12 in the band 11.

The apparatus 10 is made by first forming a cuff 14 of fabric and placing this around the resilient circular band. The band is secured in the cuff by stitching. The cuff is then placed inside a mould so that the cuff end remote from that of which the resilient band is located becomes integrally moulded with polyurethane material. One end of the tube of pleated filter material is inserted into the liquid polymer. The polymer is then cured and the filter apparatus is removed from the mould.

Referring to fig.4 a second filtration apparatus 20 is illustrated. This is similar to that shown in figs. 1 to 3 except in that the polyurethane has been moulded into a shape to incorporate the profile of a venturi nozzle. This facilitates the incorporation of an integral venturi nozzle into the product.

## Claims

1. A filtration apparatus comprising a band of resilient material located within a cuff of fabric, the cuff being integrally moulded to a body of polymeric material, a tube or sleeve of self-supporting pleated filter material also being secured to the said polymer body.

2. A filtration apparatus as claimed in claim I, wherein the cuff of fabric comprises a nonwoven fabric.

3. A filtration apparatus as claimed in claim 1 or claim 2, wherein the cuff of fabric comprises a felt.

4. A filtration apparatus as claimed in any preceding claim, wherein the band is profiled so as to comprise a groove therein.

5. A filtration apparatus as claimed in any preceding claim, wherein the band has a one piece construction.

6. A filtration apparatus as claimed in any preceding claim, wherein the band comprises steel or rubber.

7. A filtration apparatus as claimed in any preceding claim, wherein apertures are provided in the band.

8. A filtration apparatus as claimed in any preceding claim, wherein open ended apertures are provided at at least one edge of the band.

9. A filtration apparatus as claimed in any preceding claim, wherein the band is captured in the fabric, preferably by way of adhesive or stitching.

10. A filtration apparatus as claimed in any preceding claim, wherein the body of polymeric material has a Shore D hardness in the range from 20 to 50.

11. A filtration apparatus as claimed in any preceding claim, wherein a venturi nozzle is incorporated into the body of polymeric material.

12. A method of making a filtration apparatus comprising the steps of forming a cuff from a length of fabric and locating a band of resilient material within the cuff, moulding a body of polymer material to one end of the cuff and moulding the said body to one end of a tube or sleeve of self-supporting pleated filter material.

## Patentansprüche

1. Filtervorrichtung mit einem Band aus elastischem Material, das innerhalb einer Stoffmanschette angeordnet ist, wobei die Manschette an einen Körper aus einem polymeren Material angegossen ist, und wobei ein Rohr oder eine Hülse aus einem selbsttragenden geriffelten Filtermaterial ebenfalls an dem polymeren Körper angebracht ist.

2. Filtervorrichtung nach Anspruch 1,
wobei die Stoffmanschette einen nichtgewebten Stoff aufweist.

3. Filtervorrichtung nach Anspruch 1 oder Anspruch 2,
wobei die Stoffmanschette einen Filz aufweist.

4. Filtervorrichtung nach einem vorhergehenden Anspruch,
wobei das Band derart profiliert ist, daß es eine Nut enthält.

5. Filtervorrichtung nach einem vorhergehenden Anspruch,
wobei das Band einstückig ausgebildet ist.

6. Filtervorrichtung nach einem vorhergehenden Anspruch,
wobei das Band Stahl oder Gummi beinhaltet.

7. Filtervorrichtung nach einem vorhergehenden Anspruch,
wobei in dem Band Öffnungen ausgebildet sind.

8. Filtervorrichtung nach einem vorhergehenden Anspruch,
wobei an mindestens einem Rand des Bandes am Ende offene Öffnungen ausgebildet sind.

9. Filtervorrichtung nach einem vorhergehenden Anspruch,
wobei das Band in dem Gewebe vorzugsweise durch Kleben oder Nähen festgelegt ist.

10. Filtervorrichtung nach einem vorhergehenden Anspruch,
wobei der Körper aus polymerem Material eine Härte im Bereich von 20 bis 50 Shore-D aufweist.

11. Filtervorrichtung nach einem vorhergehenden Anspruch,
wobei der Körper aus polymerem Material eine Venturidüse enthält.

12. Verfahren zur Herstellung einer Filtervorrichtung mit den Verfahrensschritten des Herstellens einer Manschette aus einem Stoffstück und des Einbringens eines Bandes aus elastischem Material in die Manschette, des Anspritzens eines Körpers aus polymerem Material an ein Ende der Manschette und des Anspritzens des Körpers an ein Ende eines Rohres oder einer Hülse aus einem selbsttragenden geriffelten Filtermaterial.

## Revendications

1. Appareil filtrant comprenant un ruban de matériau souple situé dans une manchette de tissu, la manchette étant intégralement modelée à un article de matériau polymérique, un tube ou une gaine de matériau de filtre plissé indépendant étant également accroché audit article polymérique.

2. Appareil filtrant selon la revendication 1, dans lequel la manchette de tissu comprend un tissu non tissé.

3. Appareil filtrant selon la revendication 1 ou 2, dans lequel la manchette de tissu comprend du feutre.

4. Appareil filtrant selon l'une quelconque des revendications précédentes, dans lequel le ruban est profilé de telle sorte qu'il comprend une rainure.

5. Appareil filtrant selon l'une quelconque des revendications précédentes, dans lequel le ruban présente une pièce de construction.

6. Appareil filtrant selon l'une quelconque des revendications précédentes, dans lequel le ruban comprend de l'acier ou du caoutchouc.

7. Appareil filtrant selon l'une quelconque des revendications précédentes, dans lequel des ouvertures sont présentes dans le ruban.

8. Appareil filtrant selon l'une quelconque des revendications précédentes, dans lequel les ouvertures à extrémités ouvertes se situent au moins sur le bord du ruban.

9. Appareil filtrant selon l'une quelconque des revendications précédentes, dans lequel le ruban est pris dans le tissu, de préférence par le biais d'un adhésif ou d'une couture.

10. Appareil filtrant selon l'une quelconque des revendications précédentes, dans lequel l'article de matériau polymérique présente une dureté Shore D variant entre 20 et 50.

11. Appareil filtrant selon l'une quelconque des revendications précédentes, dans lequel le venturi-tuyère est incorporé dans l'article du matériau polymérique.

12. Procédé de fabrication d'un appareil filtrant comprenant les étapes de formation d'une manchette à partir de la longueur d'un tissu et en plaçant un ruban de matériau souple dans la manchette modelant un article de matériau polymérique à une extrémité de la manchette et modelant ledit article à une extrémité d'un tube ou d'une gaine d'un matériau de filtre plissé indépendant.
